# EUROPÄISCHE PATENTSCHRIFT

(11) **EP 0 727 628 B1**
(45) Veröffentlichungstag und Bekanntmachung des Hinweises auf die Patenterteilung: **15.09.2004**
(21) Anmeldenummer: 96100601.2
(22) Anmeldetag: 17.01.1996
(51) Int. Cl.: F25D 29/00, G05D 23/19

(54) **Regeleinrichtung und Verfahren zur Temperaturregelung in Kühlgeräten**
Control system and method of temperature control for refrigerators
Système de contrôle et méthode de contrôle de température pour réfrigérateurs

(30) Priorität: 20.02.1995 DE 19505706
(43) Veröffentlichungstag der Anmeldung: 21.08.1996
(73) Patentinhaber: AEG Hausgeräte GmbH, 90429 Nürnberg (DE)
(72) Erfinder: Dungler, Hans, Dipl.-Ing., D-34253 Lohfelden (DE); Glänzer, Bernd, Dipl.-Ing., D-34626 Neukirchen (DE)

(56) Entgegenhaltungen:
- EP-A- 0 513 539
- US-A- 4 292 813
- US-A- 4 296 627
- US-A- 4 298 947
- US-A- 4 354 241
- US-A- 4 671 457
- US-A- 4 725 001
- US-A- 4 759 498
- US-A- 5 115 968

## Beschreibung

Die vorliegende Erfindung bezieht sich auf eine Regeleinrichtung und ein Verfahren zur Temperaturregelung in Kühlgeräten gemäß den Oberbegriffen der Ansprüche 1 und 8. Eine solche Einrichtung und ein solches Verfahren sind z.B. aus der US-A-4 759 498 bekannt.

Für Kühl- und Gefriergeräte, hier kurz Kühlgeräte genannt, sind bereits Regeleinrichtungen bzw. Verfahren zur Temperaturregelung bekannt, die die Temperaturregelung durch das Ein- und Ausschalten eines als Kältequelle dienenden Verdichters bewerkstelligen. Das Ein- und Ausschalten des Verdichters erfolgt dabei in Abhängigkeit von einer durch einen Temperatursensor erfaßten Temperatur des Kühlraumes, der Kühlraumluft oder des Verdampfers. Im einzelnen finden hierbei folgende Vorgänge statt:

Bei Übersteigen einer ersten vorbestimmten Temperatur wird der Verdichter eingeschaltet und damit ein Absenken der Temperatur bewirkt. Unterschreitet die erfaßte Temperatur dabei eine zweite vorbestimmten Temperatur, die, wie nachfolgend noch ausführlicher erläutert wird, üblicherweise niedriger als die erste vorbestimmte Temperatur ist, wird der Verdichter wieder ausgeschaltet.

Die erste und/oder die zweite vorbestimmte Temperatur kann durch Einstellungen des Benutzers verändert werden.

Insbesondere bei elektronischen Regeleinrichtungen kann der Ein- und Ausschaltzeitpunkt von der Erfüllung zusätzlicher Bedingungen wie vom Einhalten von Mindeststandzeiten bzw. Mindestlaufzeiten abhängig gemacht werden, wobei mit "Standzeit" die Zeit bezeichnet ist, während der der Verdichter ausgeschaltet ist, und wobei mit "Laufzeit" die Zeit bezeichnet ist, während der der Verdichter eingeschaltet ist.

Obwohl die vorstehend beschriebene Temperaturregelung in nahezu allen bekannten Kühlgeräten zum Einsatz kommt, weist diese dennoch auch entscheidende Nachteile auf.

Dies liegt vor allem an der Bestimmung der Zeitpunkte zum Ein- und Ausschalten des Verdichters. Das Ein- und Ausschalten erfolgt bei den herkömmlichen Regeleinrichtungen und Regelverfahren, wie vorstehend bereits erwähnt, basierend auf der Erfassung des Überschreitens einer ersten vorbestimmten Temperatur bzw. der Erfassung des Unterschreitens einer zweiten vorbestimmten Temperatur durch die momentan erfaßte Ist-Temperatur des Kühlraumes, der Kühlraumluft oder des Verdampfers. Die erste vorbestimmte Temperatur muß hierbei, wie im folgenden beschrieben wird, höher sein als die zweite vorbestimmte Temperatur.

Wäre nämlich die zweite vorbestimmte Temperatur höher als die erste vorbestimmte Temperatur, dann wären für eine Ist-Temperatur zwischen der ersten vorbestimmten Temperatur und der zweiten vorbestimmten Temperatur die Bedingungen zum Einschalten des Verdichters und zum Ausschalten des Verdichters jeweils gleichzeitig erfüllt, was verständlicherweise eine bestimmungsgemäße Regelung in diesem Temperaturbereich entweder gänzlich unmöglich machen oder aber zumindest sehr erschweren würde.

Für den Fall, daß die erste vorbestimmte Temperatur gleich der zweiten vorbestimmten Temperatur ist, würden, wenn die Ist-Temperatur im Bereich der Soll-Temperatur liegt, bereits geringste Änderungen der Ist-Temperatur ausreichen, um ein Ein- bzw. Ausschalten des Verdichters zu bewirken, so daß der Verdichter in kurzen zeitlichen Abständen ständig einund ausgeschaltet würde, was verständlicherweise ebenfalls nicht erwünscht ist.

Die erste vorbestimmte Temperatur muß aus diesen Gründen höher sein als die zweite vorbestimmte Temperatur (Hysterese-Regelung). Fraglich ist jedoch, wie groß die Differenz vorteilhafterweise sein soll.

Ist der Unterschied zwischen der ersten vorbestimmten Temperatur und der zweiten vorbestimmten Temperatur zu klein, finden, ähnlich wie in dem Fall, daß die erste vorbestimmte Temperatur gleich der zweiten vorbestimmten Temperatur ist, viele Ein- und Ausschaltvorgänge des Verdichters statt, und die Ein- und Ausschaltzeitdauern des Verdichters sind kurz. Dies stellt einerseits eine als besonders störend empfundene Geräuschbelästigung dar, und ist andererseits auch vom wirtschaftlichen und vom ökologischen Standpunkt her ungünstig, da sich bei kurzen Laufzeiten des Verdichters dessen Anlaufverluste in nicht unerheblichen Maße nachteilig auf den Energieverbrauch des Kühlgerätes auswirken.

Ist andererseits der Unterschied zwischen der ersten vorbestimmten Temperatur und der zweiten vorbestimmten Temperatur zu groß, finden nur wenige Ein- und Ausschaltvorgänge des Verdichters statt, und die Ein- und Ausschaltzeitdauern des Verdichters sind lang. Ein solcher Betrieb des Kühlgerätes wird zwar als weniger störende Geräuschbelästigung empfunden, doch ist auch eine derartige Regelung vom wirtschaftlichen und vom ökologischen Standpunkt her ungünstig, da der Verdichter bei zu langer Laufzeit infolge des niedrigen Gasdrucks mit einem schlechten Wirkungsgrad arbeitet und sich diese Verluste in ebenfalls nicht unerheblichen Maß auf den Energieverbrauch des Kühlgerätes auswirken.

Aus der US 4 292 813 ist es bekannt, bei Kühlgerät die Länge der Laufzeit des Kompressors zu messen und zu speichern. Innerhalb eines vorgegebenen Rahmens wird die Stillstandszeit des Kompressors gemessen und gespeichert. Ist die Stillstandszeit kleiner als ein vorgegebener Wert wird diese erhöhte ist sie größer als ein vorgegebener Wert dann wird sie verringert. Aus der US 5 115 968 ist es bekannt, bei einem Überschreiben oder Unterschreiben eines vorgegebenen Temperaturwertes beim Fehlersignal zu erzeugen und mit Hilfe dieses Fehlersignals die Vorrichtung zu steuern. Aus der US 4.671 457 ist es bekannt, innerhalb eines Arbeitszyklusses die aktuelle Einschaltzeit zu messen und diese in Relation mit einem Signal eines Raumthermostaten zu sitzen.

Aus der EP 0 513 539 ist es beim elektronisch kontrollierten Haushaltsgerät bekannt, mit Hilfe von in Tabellen abgelegten Werten, die in einem nicht flüchtigen Speicher des Gerätes gespeichert werden, Werte zur Verfügung nu stellen, die es ermöglichen, mit einem die Außentemperatur messen den Sensor die Temperatursteuerung durchzuführen. Aus der US 4 759 498 ist es bekannt, ein Error-Signal zu erzeugen und dieses mit einem zeitlich davor liegenden Signal zu vergleichen und mit Hilfe dieses Vergleiches die Raumtemperatur steuern zu können.

Zusammenfassend kann also festgestellt werden, daß bei den herkömmlichen Regelvorrichtungen bzw. Verfahren zur Temperaturregelung in Kühlgeräten zumindest mit äußerst großer Wahrscheinlichkeit nicht der minimal mögliche Energieverbrauch erzielt wird.

Der Erfindung liegt daher die Aufgabe zugrunde, eine Regeleinrichtung bzw. ein Verfahren zur Temperaturregelung in Kühlgeräten zu schaffen, durch die die Kältequelle derart gesteuert werden kann, dass der Energieverbrauch des Kühlgerätes zuverlässig auf ein Minimum reduziert werden kann.

Diese Aufgabe wird für die Regeleinrichtung zur Temperaturregelung in Kühlgeräten erfindungsgemäß durch die im kennzeichnenden Teil des Patentanspruchs 1 angegebenen Merkmale gelöst, und wird für das Verfahren zur Temperaturregelung in Kühlgeräten durch die im gekennzeichnenden Teil des Patentanspruchs 8 beanspruchten Merkmale gelöst.

Im Unterschied zu den herkömmlichen Regeleinrichtungen bzw. zu den herkömmlichen Regelverfahren erfolgt das Ein- und Ausschalten der Kältequelle erfindungsgemäß also nicht mehr als unmittelbare Reaktion auf die Feststellung, daß die Ist-Temperatur gewisse Schwellenwerte über- oder unterschreitet. Stattdessen erfolgt das Ein- und Ausschalten der Kältequelle in Abhängigkeit von zuvor festgelegten Ein- und Ausschaltzeitdauern der Kältequelle.

Dadurch, daß die Ein- und Ausschaltzeitdauern der Kältequelle zwar letztendlich basierend auf erfaßten Meßgrößen, aber nicht unter alleiniger Berücksichtigung der Meßgrößen frei durch die intelligente Regeleinrichtung selbst festlegbar sind, eröffnet sich die Möglichkeit, die Ein- und Ausschaltzeitdauern derart festzulegen, daß die Kältequelle stets mit einem unter den gegebenen Umständen optimalen Wirkungsgrad betrieben wird, so daß der Energieverbrauch des Kühlgerätes auf ein Minimum reduziert werden kann.

Trotz dieses erheblichen Vorteils beim Energieverbrauch des Kühlgerätes müssen keinerlei Abstriche bei der Genauigkeit der Temperaturregelung gemacht werden. Die Festlegung der Ein- und Ausschaltzeitdauer(n) der Kältequelle erfolgt nämlich, wenngleich nicht unter einer starren Kopplung mit, so doch aber zumindest unter Zugrundelegung eines zuvor ermittelten Kühlbedarfs, welcher beispielsweise basierend auf einer Differenz zwischen einer Soll-Temperatur und einer Ist-Temperatur in Form der zusätzlich noch zu erzeugenden Kühlenergie, einer innerhalb der nächsten Zeit insgesamt erforderlichen Einschaltzeitdauer der Kältequelle, eines als relative Einschaltzeitdauer bezeichneten Verhältnisses zwischen der Einschaltzeitdauer und der Ausschaltzeitdauer der Kältequelle und dergleichen angebbar ist.

Die durch die Bereitstellung der erfindungsgemäßen Regeleinrichtung bzw. des erfindungsgemäßen Verfahrens entstehenden zusätzlichen Kosten lassen sich durch die erzielten Energieeinsparungen schnell amortisieren.

Durch die vorliegende Erfindung werden damit eine Regeleinrichtung und ein Verfahren zur Temperaturregelung in Kühlgeräten geschaffen, durch die die Kältequelle derart gesteuert werden kann, daß der Energieverbrauch des Kühlgerätes ohne Einbußen bei der Genauigkeit und der Zuverlässigkeit der Regelung stets auf ein Minimum reduziert werden kann.

Vorteilhafte Weiterbildungen der Erfindung sind Gegenstand der Unteransprüche.

Die Erfindung wird nachfolgend anhand von Ausführungsbeispielen unter Bezugnahme auf die Fig. beschrieben.

Die Fig. ist eine schematische Darstellung eines Ausführungsbeispieles des internen Aufbaus der Regeleinrichtung gemäß der vorliegenden Erfindung.

. Wie in der Fig. gezeigt ist, weist die Regeleinrichtung R Eingangsanschlüsse i1 und i2 sowie einen Ausgangsanschluß o auf.

In den Eingangsanschluß i1 wird ein einer Soll-Temperatur des Kühlraumes, der Kühlraumluft, des Verdampfers oder dergleichen entsprechendes Signal TS eingegeben.

Dieses Signal wird üblicherweise von einer durch den Benutzer der Kühlvorrichtung betätigbaren, in der Fig. nicht gezeigten Kühlleistungs-Einstelleinrichtung geliefert. Anstelle dieser Kühlleistungs-Einstelleinrichtung kann jedoch auch eine Soll-Temperatur-Ausgabevorrichtung vorgesehen sein, welche die jeweilige Soll-Temperatur automatisch anhand von für den bestimmungsgemäßen Kühlbetrieb bedeutsamen Parametern ermittelt, und welche einen der so ermittelten Soll-Temperatur entsprechenden Wert ausgibt oder welche einen einer nicht veränderbaren Soll-Temperatur entsprechenden Wert ausgibt. Für den Fall, daß die Kühlvorrichtung mit einer konstanten Soll-Temperatur arbeiten soll, kann auf den Eingangsanschluß i1 verzichtet werden und ein dieser Temperatur entsprechender Wert im Inneren der Regeleinrichtung R bereitgestellt werden.

In den Eingangsanschluß i2 der Regeleinrichtung R wird ein einer Ist-Temperatur des Kühlraumes, der Kühlraumluft, des Verdampfers oder dergleichen entsprechendes Signal TI eingegeben. Dieses Signal TI wird von einem in der Fig. nicht gezeigten Temperaturfühler erzeugt, welcher ständig oder alternativ in vorbestimmten zeitlichen Abständen die jeweilige Temperatur des Kühlraumes, der Kühlraumluft, des Verdampfers oder dergleichen erfaßt.

Aus dem Ausgangsanschluß o der Regeleinrichtung R wird ein zum Ein- und Ausschalten der Kältequelle wie eines Verdichters oder dergleichen verwendetes Signal K ausgegeben.

Die Regeleinrichtung R selbst weist eine Ist-Temperatur-Mittelungseinheit 1, eine Vergleichs/Differenzbildungseinheit 2, eine Kühlbedarfsermittlungseinheit 3, eine Kältequellensteuereinheit 4 sowie eine in der Fig. nicht gezeigte Zeitablaufsteuereinheit auf.

Die Ist-Temperatur-Mittelungseinheit 1 hat einen Eingangs- und einen Ausgangsanschluß.

Der Eingangsanschluß ist mit dem Eingangsanschluß i2 der Regeleinrichtung R verbunden; in den Eingangsanschluß wird folglich das der momentanen Ist-Temperatur entsprechende Signal TI eingegeben.

Aus dem Ausgangsanschluß wird ein Signal TIM ausgegeben.

Die Ist-Temperatur-Mittelungseinheit 1 berechnet einen zeitlichen Mittelwert des eingegebenen momentanen Ist-Temperatursignals TI und gibt ein diesem Mittelwert entsprechendes Signal als Ausgangssignal TIM aus.

Das der momentanen Ist-Temperatur entsprechende Signal TI wird im folgenden der Einfachheit halber als Ist-Temperatur TI bezeichnet. Ebenso wird im folgenden das der zeitlich gemittelten Temperatur entsprechende Signal TIM der Einfachheit halber als zeitlich gemittelte Temperatur TIM bezeichnet.

Die Zeitspanne, über welche die zeitlich gemittelte Ist-Temperatur TIM jeweils ermittelt wird, besteht im vorliegenden Ausführungsbeispiel aus der Summe einer Kältequellen-Einschaltzeitdauer bzw. Kältequellen-Laufzeit und einer Kältequellen-Ausschaltzeitdauer bzw. Kältequellen-Standzeit.

Vorzugsweise handelt es sich dabei um die jeweils letzten Einschalt- und Ausschaltzeitdauern, und vorzugsweise erfolgen der Beginn eines neuen Mittelungsvorganges und das Ende des laufenden Mittelungsvorganges sowie die Ausgabe einer aktualisierten bzw. neuen zeitlich gemittelten Ist-Temperatur TIM gleichzeitig jeweils beim Ein- oder Ausschalten der Kältequelle, so daß der Mittelwertberechnung genau und ausschließlich der aus der letzten Kältequellen-Laufzeit und der letzten Kältequellen-Standzeit bestehende Zyklus zugrunde liegt.

Als vorteilhaft könnte es sich darüber hinaus erweisen, wenn durch die Ist-Temperatur-Mittelungseinheit 1 gleichzeitig zwei Mittelungsvorgänge durchgeführt würden, wobei der erste Mittelungsvorgang jeweils beim Einschalten der Kältequelle beginnt und endet, und wobei der zweite Mittelungsvorgang jeweils bei Ausschalten der Kältequelle beginnt und endet.

Die Vergleichs/Differenzbildungseinheit 2 weist zwei Eingangsanschlüsse und einen Ausgangsanschluß auf.

Der erste Eingangsanschluß der Vergleichs/Differenzbildungseinheit 2 ist mit dem Eingangsanschluß i1 der Regeleinrichtung R verbunden; in diesen Eingangsanschluß wird folglich das der Soll-Temperatur entsprechende Signal TS eingegeben.

Das der Soll-Temperatur entsprechende Signal TS wird im folgenden der Einfachheit halber als Soll-Temperatur TS bezeichnet.

Der zweite Eingangsanschluß der Vergleichs/Differenzbildungseinheit 2 ist mit dem Ausgangsanschluß der Ist-Temperatur-Mittelungseinheit 1 verbunden; in diesen Eingangsanschluß wird folglich die zeitlich gemittelte Ist-Temperatur TIM eingegeben.

Die Vergleichs/Differenzbildungseinheit 2 vergleicht die über ihre Eingangsanschlüsse eingegebenen Signale TS und TIM bzw. bildet die Differenz zwischen diesen Signalen und gibt das Ergebnis dieser Operation als Vergleichs/Differenzsignal VD über den Ausgangsanschluß aus.

Die Kühlbedarfsermittlungseinheit 3 hat einen Eingangsanschluß und einen Ausgangsanschluß.

Der Eingangsanschluß der Kühlbedarfsermittlungseinheit 3 ist mit dem Ausgangsanschluß der Vergleichs/Differenzbildungseinheit 2 verbunden; in den Eingangsanschluß wird somit das Vergleichs/Differenzsignal VD eingegeben.

Die Kühlbedarfsermittlungseinheit 3 ermittelt basierend auf dem eingegebenen Vergleichs/Differenzsignal VD, d.h. in Abhängigkeit vom Ergebnis der in der Vergleichs/Differenzbildungseinheit 2 durchgeführten Operation dem Umfang des zur Angleichung der zeitlich gemittelten Ist-Temperatur TIM an die Soll-Temperatur TS erforderlichen Kühlbedarfs und gibt eine diesem Umfang entsprechende Bedarfsgröße als Ausgangssignal BG aus.

Gemäß der Erfindung wird als Bedarfsgröße die relative Einschaltzeitdauer der Kältequelle, d.h. das Verhältnis der Einschaltzeitdauer der Kältequelle zur Ausschaltzeitdauer der Kältequelle festgelegt.

Die Festlegung erfolgt basierend auf der Differenz zwischen der Soll-Temperatur TS und der zeitlich gemittelten Ist-Temperatur TIM.

Die Anpassung des Kühlbedarfs und der Bedarfsgröße an die jeweils herrschenden Verhältnisse erfolgt vorzugsweise zyklusweise, wobei ein Zyklus vorzugsweise aus einer Einschaltzeitdauer bzw. Laufzeit der Kältequelle und der zugeordneten Ausschaltzeitdauer bzw. Standzeit der Kältequelle besteht.

Die als Bedarfsgröße herangezogene relative Einschaltzeitdauer wird im allgemeinen wie auch im Ausführungsbeispiel als prozentualer Wert angegeben. Eine relative Einschaltzeitdauer von 50% besagt, daß die Kältequelle genauso lange eingeschaltet wie ausgeschaltet sein soll.

Für die Anpassung bzw. die Ermittlung des Kühlbedarfs und der Bedarfsgröße werden mathematische Verfahren benutzt, wie sie in der Steuerungs- und Regelungstechnik üblich sind, wobei vorzugsweise auch Funktionen der sog. Fuzzy-Logik zum Einsatz kommen.

Die ermittelte Bedarfsgröße wird als Ausgangssignal BG aus der Kühlbedarfsermittlungseinheit 3 ausgegeben.

Die Bedarfsgröße BG wird als Eingangssignal in die Kältequellensteuereinheit 4 eingegeben.

Die Kältequellensteuereinheit 4 legt basierend auf dieser den Kühlbedarf repräsentierenden Bedarfsgröße die Einschaltzeitdauer und die Ausschaltzeitdauer der Kältequelle fest.

Wie vorstehend bereits erwähnt, ist die als Bedarfsgröße verwendete relative Einschaltdauer ein prozentualer Wert, der lediglich angibt, in welchen Verhältnis die Einschaltzeitdauer der Kältequelle und die Ausschaltzeitdauer der Kältequelle zueinander zu stehen haben. Die Bedarfsgröße macht hier jedoch keine Angabe über die tatsächlich vorzusehende Einschaltzeitdauer der Kältequelle. So ist beispielsweise durch eine relative Einschaltzeitdauer von 50% lediglich festgelegt, daß die Einschaltzeitdauer (Laufzeit) der Kältequelle genauso lange ist wie die Ausschaltzeitdauer (Standzeit) der Kältequelle. Ob die Laufzeit der Kältequelle indes 5 Minuten, 20 Minuten oder gar eine Stunde beträgt, ist durch die Bedarfsgröße nicht festgelegt.

Hierin liegt der besondere Vorteil der vorliegenden Erfindung. Die Kältequellensteuereinheit 4 kann damit nämlich die Einschaltzeit(en) der Kältequelle unabhängig von der Bedarfsgröße derart festlegen, daß die Kältequelle mit einem optimalen Wirkungsgrad arbeitet und mithin der Energieverbrauch des Kühlgerätes minimal ist. Die Ausschaltzeitdauer der Kältequelle wird dann in Abhängigkeit von der festgelegten Einschaltzeitdauer so festgelegt, daß das als Bedarfsgröße verwendete Verhältnis zwischen Einschaltzeitdauer und Ausschaltzeitdauer der Kältequelle erfüllt ist.

Umfangreiche Testreihen haben ergeben, daß es zu jeder relativen Einschaltzeitdauer eine absolute Einschaltzeitdauer gibt, bei der das Kühlgerät einen minimalen Energieverbrauch hat. Die hinsichtlich des Energieverbrauchs des Kühlgerätes optimale Zuordnung zwischen relativer Einschaltzeitdauer und absoluter Einschaltzeitdauer ist geräteabhängig.

Die Zuordnungsvorschrift kann der Kältequellensteuereinheit 4 der Regeleinrichtung R in Form einer Tabelle angegeben werden.

Die Tabelle kann in der Kältequellensteuereinheit selbst oder aber auch in einer separaten Tabelleneinheit vorgesehen sein.

Die Werte können in der Tabelle dauerhaft eingeschrieben sein oder aber auch entsprechend den jeweiligen Gegebenheiten geladen oder aktualisiert werden.

Eine Aktualisierung des Tabelleninhaltes während des Betriebs des Kühlgerätes ist insbesondere dann wirkungsvoll, wenn sich der Wirkungsgrad der Kältequelle beispielsweise altersbedingt und/oder abhängig von der Soll-Temperatur und/oder der Ist-Temperatur und/oder der Außentemperatur verändert.

Das Aktualisieren der Tabelle kann beispielsweise durch die in der Fig. nicht gezeigte, später noch genauer beschriebene Zeitablaufsteuereinheit veranlaßt werden.

Die Tabelle könnte beispielsweise folgendes Aussehen haben:

| relative Einschaltzeitdauer der Kältequelle in % | absolute Einschaltzeitdauer der Kältequelle in Minuten |
|---|---|
| 20 | 5 |
| 40 | 10 |
| 60 | 20 |
| 80 | 40 |

Zwischen den Tabellenwerten kann linear gemittelt werden, so daß z.B. einer relativen Einschaltzeitdauer von 50% eine absolute Einschaltzeitdauer von 15 Minuten und dementsprechend eine Ausschaltzeitdauer von ebenfalls 15 Minuten zugeordnet wird.

Die Zuordnung einer bestimmten absoluten Einschaltzeitdauer und einer entsprechenden Ausschaltzeitdauer wird üblicherweise dazu führen, daß die Ist-Temperatur am Ende eines aus einer Einschaltzeitdauer und einer Ausschaltzeitdauer bestehenden Zyklus ungefähr gleich der Soll-Temperatur ist. Dies muß aber nicht unbedingt der Fall sein. Falls es sich für den Energieverbrauch eines bestimmten Kühlgerätes als günstig erweist, könnte stattdessen auch eine Zeitdauer-Festlegung vorgesehen werden, die während eines Zyklus nur eine mehr oder weniger große Annäherung der Ist-Temperatur an die Soll-Temperatur beabsichtigt.

Ferner kann vorgesehen werden, unter einem bestimmten Wert liegende Bedarfsgrößen in der Kältequellensteuereinheit 4 unberücksichtigt zu lassen, wenn es sich für ein bestimmtes Kühlgerät herausstellt, daß die Zuführung des dieser Bedarfsgröße entsprechenden Kühlbedarfs wegen dessen Geringfügigkeit unwirtschaftlich ist.

Des weiteren könnte, falls sich dies vom Standpunkt der Energieersparnis als vorteilhaft erweisen sollte, anstelle der starren Zuordnung einer zusammenhängenden Einschaltzeitdauer zu jeweiligen relativen Einschaltzeitdauern vorgesehen werden, die einer jeweiligen relativen Einschaltzeitdauer zuzuordnende absolute Einschaltzeitdauer und die sich daraus ergebende Ausschaltzeitdauer in mehrere gleiche oder unterschiedlich große Teil-Einschaltzeitdauern und Teil-Ausschaltzeitdauern aufzuteilen.

Darüber hinaus könnte vorgesehen werden, innerhalb eines aus Einschaltdauer(n) und Ausschaltzeitdauer(n) bestehenden Zyklus beispielsweise in Abhängigkeit von der Bedarfsgröße die Reihenfolge von Laufzeit und Standzeit der Kältequelle veränderbar festzulegen.

Der zeitliche Ablauf des Regelbetriebes wird von einer in der Fig. nicht gezeigten Zeitablaufsteuereinheit gesteuert, welche mit den einzelnen Komponenten der Regeleinrichtung über Status-, Steuersignal- und Datenleitungen verbunden ist.

Die Zeitablaufsteuereinheit ist insbesondere dafür zuständig, daß die Übernahme von an jeweiligen Eingangsanschlüssen anliegenden Eingangssignalen, die Ausgabe von über jeweilige Ausgangsanschlüsse auszugebenden Ausgangssignalen sowie der Beginn der in den einzelnen Komponenten durchzuführenden Signalverarbeitungen zu definierten Zeitpunkten erfolgt.

Ferner ist die Zeitablaufsteuereinheit dafür zuständig, besondere Betriebszustände des Kühlgerätes wie beispielsweise den Zustand nach der Inbetriebnahme des Kühlgerätes, den Zustand, daß die Ist-Temperatur wesentlich höher oder niedriger als die Soll-Temperatur ist, den Zustand, daß die Ist-Temperatur, die Soll-Temperatur und/oder die Bedarfsgrenze bestimmte absolute Grenzwerte überschreiten usw. zu erkennen und entsprechend darauf zu reagieren.

Die genannten Betriebszustände und die für diese Fälle vorgesehenen besonderen Temperaturregelungen werden später noch ausführlicher beschrieben.

Nachfolgend wird nun die Funktion der erfindungsgemäßen Regeleinrichtung beschrieben.

Zunächst werden die Soll-Temperatur TS des Kühlraumes, der Kühlraumluft, des Verdampfers oder dergleichen und die zeitlich gemittelte Ist-Temperatur TIM des Kühlraumes, der Kühlraumluft, des Verdampfers oder dergleichen, welche zuvor durch die Ist-Temperatur-Mittelungseinheit 1 ermittelt und ausgegeben wurde, durch die Vergleichs/Differenzbildungseinheit 2 miteinander verglichen bzw. einer Differenzbildung unterzogen. Das daraus resultierende Ergebnis wird als Vergleichs/Differenzsignal VD an die Kühlbedarfsermittlungseinheit 3 ausgegeben.

In Abhängigkeit vom Vergleichs/Differenzsignal VD, d.h. in Abhängigkeit vom Ergebnis der in der Vergleichs/Differenzbildungseinheit 2 durchgeführten Operation, d.h. in Abhängigkeit von der Differenz zwischen der zeitlich gemittelten Ist-Temperatur TIM und der Soll-Temperatur TS, wird in der Kühlbedarfsermittlungseinheit 3 der Umfang des zur Angleichung der zeitlich gemittelten Ist-Temperatur TIM an die Soll-Temperatur TS erforderlichen Kühlbedarfs ermittelt und eine diesem Umfang entsprechende Bedarfsgröße gebildet. Bezüglich der physikalischen oder sonstigen Größe, welche durch die Bedarfsgröße repräsentiert werden kann, wird auf die vorstehenden Erläuterungen der Kühlbedarfsermittlungseinheit 4 verwiesen. Gemäß der Erfindung wird, wie vorstehend bereits erwähnt, als Bedarfsgröße die relative Einschaltzeitdauer der Kältequelle, d.h., das Verhältnis der Einschaltzeitdauer der Kältequelle zur Ausschaltzeitdauer der Kältequelle verwendet. Hierbei werden im einzelnen in Abhängigkeit von dem in die Kühlbedarfsermittlungseinheit eingegebenen Vergleichs/Differenzsignal VD folgende Festlegungen getroffen:
1) Ist die Soll-Temperatur gleich der zeitlich gemittelten Ist-Temperatur, besteht kein Anlaß, das momentane Verhältnis zwischen der Einschaltzeitdauer der Kältequelle und der Ausschaltzeitdauer der Kältequelle zu verändern. D.h., die momentane relative Einschaltzeitdauer wird unverändert beibehalten.
2) Ist die Soll-Temperatur höher als die zeitlich gemittelte Ist-Temperatur, so ist die momentan erbrachte Kühlleistung zu hoch, so daß das Verhältnis zwischen der Einschaltzeitdauer der Kältequelle und der Ausschaltzeitdauer der Kältequelle verringert werden muß. D.h., die momentane relative Einschaltzeitdauer ist zu verringern.
3) Ist die Soll-Temperatur niedriger als die zeitlich gemittelte Ist-Temperatur, so ist die momentan erbrachte Kühlleistung zu niedrig, so daß das Verhältnis zwischen der Einschaltzeitdauer der Kältequelle und der Ausschaltzeitdauer der Kältequelle vergrößert werden muß. D.h., die momentane relative Einschaltzeitdauer ist zu erhöhen.

Auf der Basis der von der Kühlbedarfsermittlungseinheit 3 ermittelten und ausgegebenen Bedarfsgröße BG werden in der Kältequellensteuereinheit 4 die Einschaltzeitdauer(n) der Kältequelle und die Ausschaltzeitdauer(n) der Kältequelle festgelegt.

Diese in der Kältequellensteuereinheit 4 letztendlich zwar auf erfaßten Meßgrößen basierende, aber nicht unter alleiniger Berücksichtigung der Meßgrößen erfolgende freie Festlegung der Dauern von Ein- und Ausschaltzeit der Kältequelle eröffnet - im Gegensatz zur herkömmlichen, allein temperaturabhängigen Festlegung der Zeitpunkte des Ein- und Ausschaltend der Kältequelle - die Möglichkeit, die Ein- und Ausschaltzeitdauern derart festzulegen, daß die Kältequelle stets mit einem unter den gegebenen Umständen optimalen Wirkungsgrad betrieben wird, so daß der Energieverbrauch des Kühlgerätes auf ein Minimum reduziert werden kann.

Die vorstehend beschriebene Temperaturregelung erweist sich insbesondere dann als vorteilhaft, wenn sich die zeitlich gemittelte Ist-Temperatur in der Nähe der Soll-Temperatur befindet.

Wird die vorstehend beschriebene erfindungsgemäße Regelung hingegen bei einer zeitlich gemittelten Ist-Temperatur angewendet, die sehr viel höher ist als die Soll-Temperatur, so könnte die Ausrichtung der Kühlung an einem minimalen Energieverbrauch dazu führen, daß die Angleichung der Ist-Temperatur an die Soll-Temperatur relativ lange dauert.

In einem solchen Fall könnte es sich daher als vorteilhaft erweisen, die vorstehend beschriebene erfindungsgemäße Temperaturregelung nur dann auszuführen, wenn die Ist-Temperatur in einem vorbestimmten Bereich um die Soll-Temperatur liegt.

Der Umfang des Bereiches und die Lage des Bereiches relativ zur Soll-Temperatur, d.h. eine untere Grenztemperatur und eine obere Grenztemperatur können aufgrund vorbestimmter Werte oder in Abhängigkeit von der Soll-Temperatur und/oder der Temperatur außerhalb des Kühlgerätes festgelegt werden.

Während für innerhalb des besagten Bereichs liegende Ist-Temperaturen bzw. zeitlich gemittelte Ist-Temperaturen die vorstehend beschriebene erfindungsgemäße Temperaturregelung durchgeführt wird, kann, um schneller zur Soll-Temperatur zu gelangen, für außerhalb des Bereichs liegende Temperaturen eine andere Art von Temperaturregelung vorgesehen werden.

Diese andere Temperaturregelung kann beispielsweise die eingangs beschriebene herkömmliche Temperaturregelung sein, bei welcher die Kältequelle so lange ununterbrochen eingeschaltet bleibt, bis die Ist-Temperatur bzw. die zeitlich gemittelte Ist-Temperatur die Soll-Temperatur erreicht hat.

Alternativ wäre als andere Temperaturregelung auch eine Abwandlung der herkömmlichen Temperaturregelung denkbar, so daß die Kältequelle nur so lange eingeschaltet bleibt, bis die Ist-Temperatur bzw. die zeitlich gemittelte Ist-Temperatur die Grenze des Bereichs erreicht hat, innerhalb dessen die erfindungsgemäße Temperaturregelung durchgeführt wird.

Die soeben gemachten Ausführungen beziehen sich auf einen Zustand, in dem die Ist-Temperatur bzw. die gemittelte Ist-Temperatur zu weit von der Soll-Temperatur abweicht. Die für einem derartigen Fall vorgeschlagene Vorgehensweise ist nach entsprechender Anpassung ebenfalls vorteilhaft anwendbar, wenn die absoluten Werte der Ist-Temperatur bzw. der zeitlich gemittelten Ist-Temperatur und/oder der Soll-Temperatur und/oder der Bedarfsgröße vorbestimmte absolute obere und/oder untere Grenzwerte über- bzw. unterschreiten.

Eine derartige Anwendung verschiedener Temperaturregelunge bietet den Vorteil, daß sparsamer Umgang mit Energie und schnelle und zuverlässige Kühlung auf einfache Weise gleichzeitig realisierbar sind.

Eine weitere Situation, in welcher die vorstehend beschriebene erfindungsgemäße Temperaturregelung nicht oder nur modifiziert anwendbar ist, liegt beim Einschalten der Stromversorgung zum Kühlgerät, d.h. bei dessen Inbetriebnahme vor.

Zu diesem Zeitpunkt liegt verständlicherweise noch keine den tatsächlichen Gegebenheiten entsprechende zeitlich gemittelte Ist-Temperatur vor.

Dementsprechend ist es auch nicht möglich, daß die Vergleichs/Differenzbildungseinheit 2, die Kühlbedarfsermittlungseinheit 3 und die Kältequellensteuereinheit 4 Signale ausgeben, die den real vorliegenden Gegebenheiten entsprechen.

Folglich erweist es sich als vorteilhaft, nach der Inbetriebnahme des Kühlgerätes zunächst anstelle der vorstehend beschriebenen erfindungsgemäßen Temperaturregelung eine der folgenden Temperaturregelungen vorzusehen:
1) Anwendung der eingangs beschriebenen herkömmlichen .Temperaturregelung, und zwar zumindest so lange, bis zur erfindungsgemäßen Temperaturregelung heranziehbare Meßgrößen und Daten vollständig vorliegen.
2) Anwendung des vorstehend beschriebenen erfindungsgemäßen Verfahrens, jedoch unter Verwendung des der momentanen Ist-Temperatur entsprechenden Signals TI anstelle des der zeitlich gemittelten Ist-Temperatur entsprechenden Signals TIM und/oder unter Verwendung eines vorbestimmten oder beispielsweise unter Heranziehung der momentanen Ist-Temperatur oder der Außentemperatur geschätzten Bedarfsgröße, und zwar zumindest so lange, bis zur erfindungsgemäßen Regelung heranziehbare Meßgrößen und Daten vollständig vorliegen.
3) Abwandlung des vorstehend beschriebenen erfindungsgemäßen Verfahrens mit folgender Ermittlung einer den gegebenen Umständen entsprechenden Bedarfsgröße:
   Die Kältequelle des Kühlgerätes wird nach Inbetriebnahme desselben eingeschaltet. Beim Abkühlen des Kühlraumes, der Kühlraumluft, des Verdampfers oder dergleichen wird die Zeit gemessen, die notwendig ist, damit die Ist-Temperatur bzw. die zeitlich gemittelte Ist-Temperatur in der Nähe der Soll-Temperatur eine vorbestimmte Temperaturdifferenz durchläuft.
   Anschließend wird nach dem Ausschalten der Kältequelle die Zeit gemessen, die notwendig ist, um die selbe Temperaturdifferenz in Richtung Erwärmung zu durchlaufen.
   Aus diesen beiden Zeiten wird die erste Bedarfsgröße, d.h. im vorliegenden Ausführungsbeispiel die erste relative Einschaltzeitdauer der Kältequelle berechnet; die dermaßen berechnete Bedarfsgröße dient als Ausgangspunkt für die anschließende Temperaturregelung.

Gemäß der Erfindung wird in der Vergleichs/Differenzbildungseinheit 2 die Soll-Temperatur TS mit der gemittelten Ist-Temperatur TIM vergleichen. Die Verwendung der zeitlich gemittelten Temperatur TIM bietet den Vorteil, daß vorübergehende Schwankungen der Ist-Temperatur am Ort des Temperatursensors nicht sofort zu einer unter Umständen überhaupt nicht erforderlichen Nachregelung der Temperatur führen.

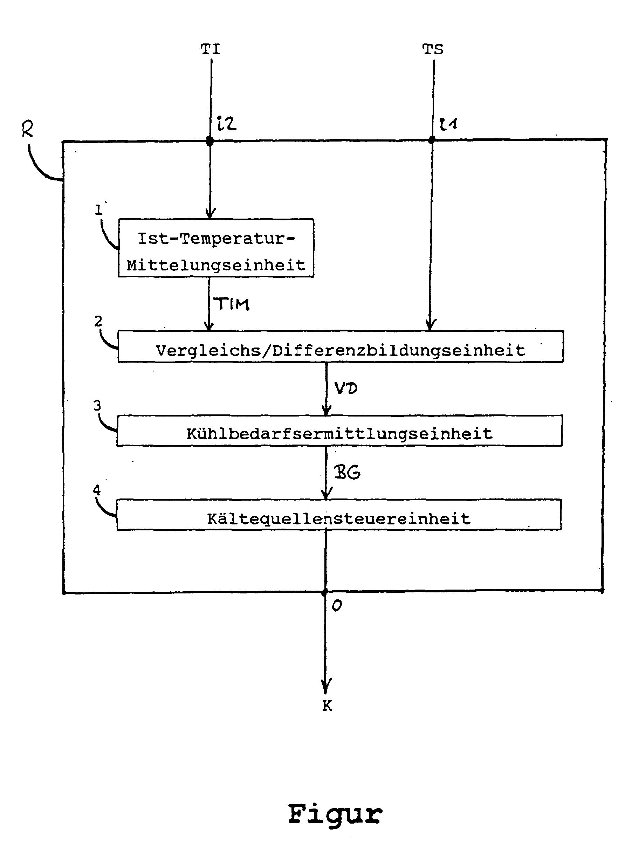

## Patentansprüche

1. Regeleinrichtung zur Temperaturregelung in Kühlgeräten, die aufweist
eine Kühlbedarfsermittlungseinheit (3), welche den Umfang des momentanen Kühlbedarfs ermittelt und eine diesem Umfang entsprechende Bedarfsgröße (BG) bildet, und
eine Kühlquellensteuereinheit (4), welche basierend auf der durch die Kühlbedarfsermittlungseinheit (3) ermittelten Bedarfsgröße (BG) die Einschaltzeitdauer(n) einer Kältequelle und die Ausschaltzeitdauer(n) der Kältequelle festlegt und dementsprechend das Ein- und Ausschalten der Kältequelle veranlasst, wobei die Kühlbedarfsermittlungseinheit derart ausgebildet ist, dass diese den Kühlbedarf und die diesem entsprechende Bedarfsgröße basierend auf der Differenz zwischen einer Soll-Temperatur und einer Ist-Temperatur ermittelt, **dadurch gekennzeichnet, dass** die Kühlbedarfsermittlungseinheit (3) derart ausgebildet ist, dass als Bedarfsgröße (BG) eine relative Einschaltzeitdauer der Kältequelle gebildet wird, welche das Verhältnis der Einschaltzeitdauer der Kältequelle zur Ausschaltzeitdauer der Kältequelle angibt, wobei eine Ist-Temperatur-Mittelungseinheit (1) vorgesehen ist, welche eine zeitlich gemittelte Ist-Temperatur als Ist-Temperatur für die Differenzbildung zur Verfügung stellt.

2. Regeleinrichtung nach einem der vorhergehenden Ansprüche, **dadurch gekennzeichnet, dass** die Kühlbedarfsermittlungseinheit (3) derart ausgebildet ist, dass die Bedarfsgröße zyklusweise angepasst wird, wobei ein Zyklus eine Einschaltzeitdauer der Kältequelle und eine zugeordnete Ausschaltzeitdauer der Kältequelle umfasst.

3. Regeleinrichtung nach einem der vorhergehenden Ansprüche, **dadurch gekennzeichnet, dass** zum Festlegen der Einschaltzeitdauer der Kältequelle und der Ausschaltzeitdauer der Kältequelle eine Tabelleneinheit vorgesehen ist, welcher eine Zuordnung von absoluten Einschaltzeitdauern und absoluten Ausschaltzeitdauern der Kältequelle zu jeweiligen Bedarfsgrößen entnehmbar ist.

4. Regeleinrichtung nach einem der vorhergehenden Ansprüche, **dadurch gekennzeichnet, dass** diese derart ausgebildet ist, dass sie nur innerhalb eines gewissen Istund/oder Soll-Temperatur- und/oder Bedarfsgrößenbereiches arbeitet, welcher an den Grenzen durch feste Einschalt- und Ausschaltwerte begrenzt ist.

5. Regeleinrichtung nach einem der vorhergehenden Ansprüche, **dadurch gekennzeichnet, dass** diese so aufgebaut ist, dass nach der Inbetriebnahme des Kühlgerätes.die Bedarfsgröße am Anfang aus den Zeiten berechnet wird, die benötigt werden, um einen bestimmten Ist-Temperaturbereich zu durchlaufen.

6. Regeleinrichtung nach einem der Ansprüche 1 bis 4, **dadurch gekennzeichnet, dass** diese so aufgebaut sind, dass nach der Inbetriebnahme des Kühlgerätes als Bedarfsgröße am Anfang ein vorbestimmter Wert verwendet wird.

7. Regeleinrichtung nach einem der Ansprüche 1 bis 4, **dadurch gekennzeichnet, dass** diese so aufgebaut sind, dass nach der Inbetriebnahme des Kühlgerätes als Bedarfsgröße am Anfang ein Wert unter Berücksichtigung der momentanen Istund/oder Außentemperatur geschätzt wird.

8. Verfahren zur Temperaturregelung in Kühlgeräten, mit folgenden Schritten:
Ermittlung des Umfangs des momentanen Kühlbedarfs des Kühlgerätes,
Bildung einer dem Umfang des momentanen Kühlbedarfs entsprechenden Bedarfsgröße (BG),
Festlegung der Einschaltzeitdauer(n) einer Kältequelle und der Ausschaltzeitdauer(n) der Kältequelle auf der Basis der zuvor ermittelten Bedarfsgröße, und
Veranlassung des Ein- und Ausschaltens der Kältequelle entsprechend der zuvor ermittelten Ein- und Ausschaltzeitdauern der Kältequelle, wobei der Kühlbedarf und die diesem entsprechende Bedarfsgröße basierend auf der Differenz zwischen einer Soll-Temperatur und einer Ist-Temperatur ermittelt werden, **dadurch gekennzeichnet**, als Bedarfsgroße (BG) eine relative Einschaltzeitdauer der Kältequelle gebildet wird, welche das Verhältnis der Einschaltzeitdauer der Kältequelle zur Ausschaltzeitdauer der Kältequelle angibt, und daß eine zeitlich gemittelte Ist-Temperatur als Ist-Temperatur für die Differenzbildung verwendet wird.

9. Verfahren nach Anspruch 8, **dadurch gekennzeichnet, dass** die Bedarfsgröße zyklusweise angepasst wird, wobei ein Zyklus eine Einschaltzeitdauer der Kältequelle und eine zugeordnete Ausschaltzeitdauer der Kältequelle umfasst.

10. Verfahren nach Anspruch 8 oder 9, **dadurch gekennzeichnet, dass** zum Festlegen der Einschaltzeitdauer der Kältequelle und der Ausschaltzeitdauer der Kältequelle eine Tabelle verwendet wird, welcher eine Zuordnung von absoluten Einschaltzeitdauern und absoluten Ausschaltzeitdauern der Kältequelle zu jeweiligen Bedarfsgrößen entnehmbar ist.

11. Verfahren nach einem der Ansprüche 8 bis 10, **dadurch gekennzeichnet, dass** dieses nur innerhalb eines gewissen Ist- und/oder Soll-Temperatur- und/oder Bedarfsgrößenbereiches verwendet wird, welcher an den Grenzen durch feste Einschalt- und Ausschaltwerte begrenzt ist.

12. Verfahren nach einem der Ansprüche 8 bis 11, **dadurch gekennzeichnet, dass** nach der Inbetriebnahme des Kühlgerätes die Bedarfsgröße am Anfang aus den Zeiten berechnet wird, die benötigt werden, um einen bestimmten Ist-Temperaturbereich zu durchlaufen.

13. Verfahren nach einem der Ansprüche 8 bis 12, **dadurch gekennzeichnet, dass** nach der Inbetriebnahme des Kühlgerätes als Bedarfsgröße am Anfang ein vorbestimmter Wert verwendet wird.

14. Verfahren nach einem der Ansprüche 8 bis 13, **dadurch gekennzeichnet, dass** nach der Inbetriebnahme des Kühlgerätes als Bedarfsgröße am Anfang ein Wert unter Berücksichtigung der momentanen Ist- und/oder Außentemperatur geschätzt wird.

## Claims

1. Control device for controlling temperature in refrigerators, having
- a unit (3) for determining the cooling requirement, which determines the extent of the instantaneous cooling requirement and forms a requirement variable (BG) corresponding to this extent, and
- a chill source control unit (4), which based on the requirement variable (BG) determined by the unit (3) for determining the cooling requirement fixes the switch-on duration(s) of a chill source and the switch-off duration(s) of the chill source and accordingly brings about switching on and off of the chill source, wherein the unit for determining the cooling requirement is so formed that it determines the cooling requirement and the corresponding requirement variable based on the differential between a setpoint temperature and an actual temperature, **characterised in that** the unit (3) for determining the cooling requirement is so formed that as a requirement variable (BG) a relative switch-on duration of the chill source is formed, which indicates the ratio of the switch-on duration of the chill source to the switch-off duration of the chill source, in which case an actual temperature averaging unit (1) is provided, which makes available an actual temperature averaged over time as an actual value for forming the differential.

2. Control device according to one of the preceding claims, **characterised in that** the unit (3) for determining the cooling requirement is so formed that the requirement variable is adapted in cycles, one cycle comprising a switch-on duration of the chill source and an associated switch-off duration of the chill source.

3. Control device according to one of the preceding claims, **characterised in that** in order to fix the switch-on duration of the chill source and the switch-off duration of the chill source a table unit is provided, from which an allocation of absolute switch-on durations and absolute switch-off durations of the chill source is deducible for each requirement variable.

4. Control device according to one of the preceding claims, **characterised in that** this is so formed that it operates only within a certain actual and/or setpoint temperature and/or range of requirement variables, which is defined at the limits by fixed switch-on and switch-off values.

5. Control device according to one of the preceding claims, **characterised in that** this is so constructed that after the refrigerator has been set in operation the requirement variable at the start is calculated from the times required to pass through a certain actual temperature range.

6. Control device according to one of claims 1 to 4, **characterised in that** this is so constructed that after the refrigerator has been set in operation, at the start a predetermined value is used as the requirement variable.

7. Control device according to one of claims 1 to 4, **characterised in that** this is so constructed that after the refrigerator has been set in operation, at the start a value is estimated as the requirement variable, taking into account the instantaneous actual and/or external temperature.

8. Method of controlling the temperature in refrigerators, comprising the following steps:
- taking into account the extent of the instantaneous cooling requirement of the refrigerator
- forming a requirement variable (BG) corresponding to the extent of the instantaneous cooling requirement,
- fixing the switch-on duration(s) of a chill source and the switch-off duration(s) of the chill source on the basis of the previously determined requirement variable, and
- bringing about switching on and off of the chill source according to the previously determined switch-on and switch-off durations of the chill source, wherein the cooling requirement and the corresponding requirement variable based on the differential between a setpoint temperature and an actual temperature are determined, **characterised in that** as a requirement variable (BG) a relative switch-on duration of the chill source is formed which indicates the ratio of the switch-on duration of the chill source to the switch-off duration of the chill source and **in that** an actual temperature averaged over time is used as the actual temperature for forming the differential.

9. Method according to claim 8, **characterised in that** the requirement variable is adapted in cycles, one cycle comprising a switch-on duration of the chill source and an associated switch-off duration of the chill source.

10. Method according to claim 8 or 9, **characterised in that** in order to fix the switch-on duration of the chill source and the switch-off duration of the chill source, a table is used from which an allocation of absolute switch-on durations and absolute switch-off durations of the chill source are deducible for respective requirement variables.

11. Method according to one of claims 8 to 10, **characterised in that** this is only used within a certain actual and/or setpoint temperature and/or range of requirement variables which is defined at the limits by fixed switch-on and switch-off values.

12. Method according to one of claims 8 to 11, **characterised in that** after the refrigerator has been set in operation the requirement variable at the start is calculated from the times required to pass through a certain actual temperature range.

13. Method according to one of claims 8 to 12, **characterised in that** after the refrigerator has been set in operation at the start a predetermined value is used as the requirement variable.

14. Method according to one of claims 8 to 13, **characterised in that** after the refrigerator has been set in operation at the start a value is estimated as the requirement variable taking into account the instantaneous actual and/or external temperature.

## Revendications

1. Système de contrôle pour le réglage de la température dans des appareils de réfrigération, qui présente :
- une unité de détermination (3) de la réfrigération requise, qui détermine l'étendue de la réfrigération requise momentanée et forme une grandeur requise (BG), correspondant à cette étendue et,
- une unité de commande de la source de refroidissement (4) qui, sur la base de la grandeur requise (BG) déterminée par l'unité de détermination de la réfrigération requise (3) détermine la(les) durée(s) de mise en service d'une source de froid et la(les) durée(s) de coupure de la source de froid et provoque d'une manière correspondante la mise en et hors service de la source de froid, où l'unité de détermination de la réfrigération requise est réalisée de façon que celle-ci détermine la réfrigération requise et la grandeur requise correspondant à celle-ci sur la base de la différence entre une température de consigne et une température réelle, **caractérisé en ce que** l'unité de détermination (3) de la réfrigération requise est réalisée de façon que, comme grandeur requise (BG), une durée de mise en service relative de la source de froid est formée qui indique le rapport de la durée de mise en service de la source de froid à la durée de coupure de la source de froid, où est prévue une unité de moyennage (1) de la température réelle qui met à disposition une température réelle moyennée dans le temps comme température réelle pour la formation de la différence.

2. Système de contrôle selon l'une des revendications précédentes, **caractérisé en ce que** l'unité de détermination (3) de la réfrigération requise est réalisée de façon que la grandeur requise soit adaptée par cycles, où un cycle comprend une durée en service de la source de froid et une durée de coupure associée de la source de froid.

3. Système de contrôle selon l'une des revendications précédentes, **caractérisé en ce que** pour déterminer la durée en service de la source de froid et la durée de coupure de la source de froid, une unité formant tableau est prévue de laquelle peut être déduite une attribution des durées en service absolus et des durées hors service absolus de la source de froid aux grandeurs requises respectives.

4. Système de contrôle selon l'une des revendications précédentes, **caractérisé en ce que** celui-ci est réalisé de façon qu'il fonctionne seulement à l'intérieur d'une certaine plage de températures réelles et/ou de consigne et/ou de grandeur requises, qui est limitée aux limites par des valeurs de mise en et hors service fixes.

5. Système de contrôle selon l'une des revendications précédentes, **caractérisé en ce que** celui-ci est construit de façon qu'après la mise en service de l'appareil de réfrigération, la grandeur requise est calculée au début à partir des durées qui sont nécessaires pour traverser une plage de température réelles déterminée.

6. Système de contrôle selon l'une des revendications 1 à 4, **caractérisé en ce que** celui-ci est construit de façon qu'après la mise en service de l'appareil de réfrigération, comme grandeur requise, au début une valeur prédéterminée est utilisée.

7. Système de contrôle selon l'une des revendications 1 à 4, **caractérisé en ce que** celui-ci est construit de façon qu'après la mise en service de l'appareil de réfrigération, comme grandeur requise, au début une valeur est estimée en prenant en considération la température momentanée réelle et/ou extérieure.

8. Procédé pour le réglage de la température dans des appareils de réfrigération, comprenant les étapes consistant à :
déterminer l'étendue de la réfrigération momentanée requise de l'appareil de réfrigération,
formation d'une grandeur requise (BG) correspondant à l'étendue de la réfrigération momentanée requise,
fixer la(les) durée(s) en service d'une source de froid et la(les) durée(s) hors service de la source de froid sur la base de la grandeur requise déterminée avant et,
provoquer la mise en et hors service de la source de froid conformément aux durées en service et hors service déterminées avant de la source de froid, où le froid requis et la grandeur requise correspondant à celui-ci sont déterminés sur la base de la différence entre une température de consigne et une température réelle, **caractérisé en ce que** comme grandeur requise (BG), une durée en service relative de la source de froid est formée qui indique le rapport de la durée en service de la source de froid à la durée hors service de la source de froid, et **en ce qu'**une température réelle moyennée dans le temps est utilisée comme température réelle pour la formation de la différence.

9. Procédé selon la revendication 8, **caractérisé en ce que** la grandeur requise est adaptée par cycle, où un cycle comprend une durée en service de la source de froid et une durée hors service associée de la source de froid.

10. Procédé selon la revendication 8 ou 9, **caractérisé en ce que** pour déterminer la durée en service de la source de froid et la durée hors service de la source de froid, un tableau est utilisé duquel ressort une attribution de durées en service absolues et de durées hors service absolues de la source de froid aux grandeurs requises respectives.

11. Procédé selon l'une des revendications 8 à 10, **caractérisé en ce que** celui-ci est utilisé seulement à l'intérieur d'une plage de températures réelles et/ou de consigne et/ou de grandeurs requises qui est limitée aux limites par des valeurs en service et hors service fixes.

12. Procédé selon l'une des revendication 8 à 11, **caractérisé en ce que**, après la mise en service de l'appareil de réfrigération, la grandeur requise est calculée au début à partir des durées qui sont requises pour traverser une plage de températures réelles déterminée.

13. Procédé selon l'une des revendications 8 à 12, **caractérisé en ce qu'**après la mise en service de l'appareil de réfrigération, on utilise comme grandeur requise au début une valeur prédéfinissable.

14. Procédé selon l'une des revendications 8 à 13, **caractérisé en ce qu'**après la mise en service de l'appareil de réfrigération, comme grandeur requise, on estime au début une valeur en considérant la température momentanée réelle et/ou extérieure.
